# EUROPEAN PATENT APPLICATION

(11) **EP 1 926 044 A1**
(43) Date of publication of application: **28.05.2008**
(21) Application number: 06124737.5
(22) Date of filing: 24.11.2006
(51) Int. Cl.: G06Q 30/00, G06Q 10/00

(54) **Product development**

(71) Applicant: Pond, 111 44 Stockholm (SE)
(72) Inventor: Schager, Staffan, 2100, Copenhagen (DK)
(74) Representative: Karlsson, Leif Karl Gunnar

(57) **Abstract**

The present invention relates to a method and system for product development, where a test person is presented with a number of parts of the product (11), and where multiple selections of features are available for each part. The person can freely combine different features for each part (12, 13) through a computer unit, and the combination of the different parts with selected features is presented seamiessly as a product in a visual presentation by the computer unit. A log is stored in the computer unit (16), which log contains the history of every selection made by the person in the process of arriving at the final result of the selections.

## Description

### Field of invention

The present invention relates to a method and a system for product development, where a test person is presented with a number of parts of a product, where multiple selections of features are available for each part, and where the person can indicate a selection of feature for each part. Each part, with respective features, is presented visually by a computer unit, and the person can freely combine different features for each part through the computer unit. A combination of the different parts with selected features is presented seamlessly as a product in a visual presentation by the computer unit. The person can make a new selection of any features for any part after a first selection has been made, and new selections can be made until the person is satisfied.

The present invention also relates to a computer program product and a computer readable medium where through the invention can be realised.

### Description of background art

There are various methods and systems for product development known to the art. When a product is to be adapted to how a costumer would prefer the product it is important to get the customers input on the product design.

Many different forms are used where customers can express how they prefer a product to be. These forms can be both in paper version or electrical and accessible through a computer. An investigation can be done to see what the costumers prefer by comparing the preferences from several costumers through filled in forms from several different customers.

It is also known to let a costumer design a product through for instance the Internet. An Internet site selling cars can show a car model where the customer easily can select colour of the car and thus see how the product will look in the selected colour.

It is also known to have Internet tools where a costumer can design a kitchen environment with different cupboards, doors, colours and materials. It is thus possible for the customer to select a feature, such as the colour, for a part, such as a door on a kitchen cupboard, of the product.

Online booking systems are also known, where the product is a vacation trip and where the customer can specify the product by booking tickets, hotels and different activities by selecting features to different parts of the trip. The features can be first or second class on the flight, the flight being a part of the trip, or hotel near the beach or in the city, the hotel being a part of the trip.

These products designed by the customer are used to help the customer to choose from a variety of products and in some instances to specify the product that the customer wants to buy.

### Summary of the present invention

### Problems

It is a problem to develop a product so that it will appeal most customers, or to know what the customers wants in product development.

It is also a problem to understand why or how the customer thinks before finally deciding on how he/she wants to specify the product.

With a form where a person has selected one feature from many possible features for a specific part of a product, it is a problem to enable the product developer to see how the person reached that decision or what the person thought about before reaching that decision.

### Solution

With the purpose of solving one or more of the above stated problems, and from the standpoint of the above shown field of invention, the present invention teaches that a log is stored in a storage unit belonging to the computer unit, which log contains the history of every selection made by said person in the process of arriving at the final result of said selections together with the final result.

This log will enable the product developer to see what different features that were selected and abandoned by the person before reaching the final decision. The log will also show the product developer other combinations of features that was tried and eventually abandoned before reaching the final decision. The product developer can also se if one or several features were selected many times, or maybe no time, in the process of reaching the final decision. All of this information is important for the product developer.

The first selection of features can either be a default version of the product or it can be made by the person through a selection of a feature for every part.

In order to enable a comparison between he selection of many different persons it is proposed that the log is made available together with logs from several different persons in a subsequent evaluation.

The features of the different parts of the product can be related to the form, colour, structure or material of the part and it can also be related to the position of the part in relation to other parts in the product.

### Advantages

The advantages of a device, system, or a computer program product according to the present invention are that the present invention will provide a tool for product development where the developer can see not only the final selection of a test person, but also how interesting that test person found other features that were not selected in the final selection.

The developer can also see combinations that the test person tried but abandoned in the process of making the final selection.

All of this information is very useful in the process of developing a new product or improving an existing product.

### Brief description of the drawings

A method, a system, and computer program products according to the present invention will now be described in detail with reference to the accompanying drawings, in which:
- Figure 1: is a schematic flowchart diagram of an inventive method,
- Figure 2: is a schematic and simplified illustration of an inventive system,
- Figure 3: is a schematic illustration of a log used by the inventive method and system, and
- Figure 4: is a schematic illustration of a computer readable medium.

### Description of embodiments as presently preferred

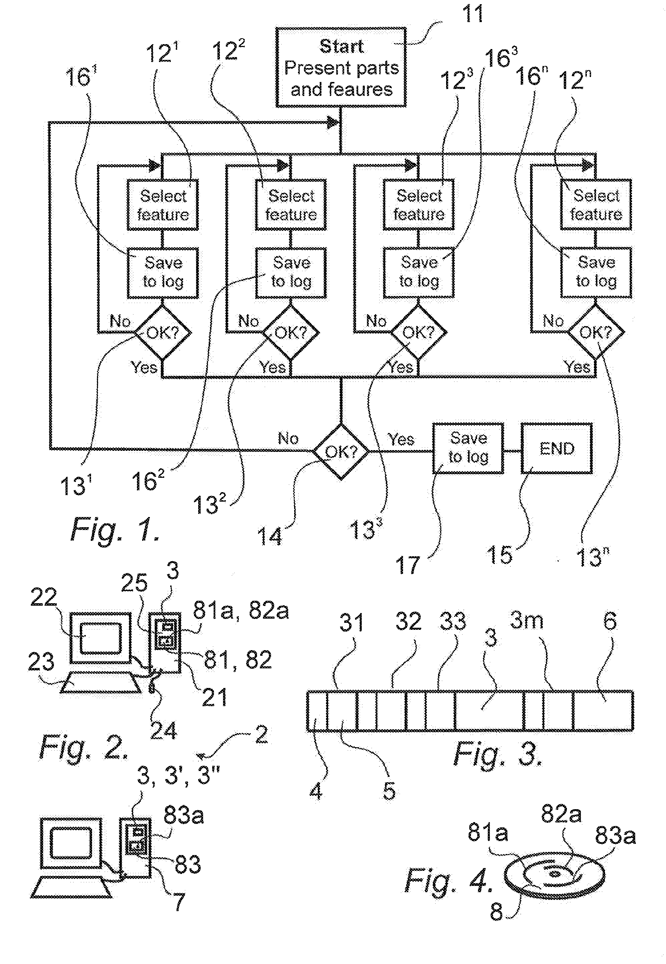

The present invention will now be described with reference to the flowchart of figure 1 illustrating an inventive method for product development.

The method has a first step 11 where a test person is presented with a number of parts of the product, and where multiple selections of features are available for each part. A first selection of features for each part is described in this step.

The method allows the person to indicate a selection of feature for each part, where each part, with respective features, is presented visually by a computer unit.

The person can freely combine different features for each part through the computer unit, and a combination of the different parts with selected features is presented seamlessly as a product in a visual presentation by the computer unit.

The next step 12 allows the person to make a new selection of any features for any part, and new selections can be made until the person is satisfied 13. The flowchart indicates that step 12 and 13 can be made for every part of the product, thus showing steps 12¹,12²,12³, ..., 12ⁿ, and steps 13¹,13²,13³, ..., 13ⁿ where "n" represents the number of different parts of the product that can be modified by the person.

This selection process can continue until the person is satisfied with the selection 14, resulting in a final selection presenting the preferred product of the person.

The present invention specifically teaches that a log is stored in a storage unit belonging to said computer unit, and that every selection that the person does is saved 16¹, 16², 16³, ... , 16³ in the log so that the log will contain the history of every selection made by the person in the process of arriving at the final result of the selections.

This log will then give important information of how the person tried different combinations before arriving at the final result. It will also show if different features were not tried at all or if certain features were tried several times in different combinations. This information is most vital in the evaluation of the result from the test person and in the process of developing the product.

The present invention teaches that the first selection in the fist step 11 can either be a default version of the product presented to the person, or that the first selection can be made by the person through a first selection of a feature for every part.

In a development process of a product several different persons can be made to go through the steps of figure 1 and the product development process includes a subsequent evaluation of logs from these several different persons.

The final result of the selections made by the person is represented by the last selections stored in the log, however, it is also possible to store the final result as a separate post in the log.

The present invention different features of respective part can relate to the form, colour, structure or material of the part. The features can also relate to the position of the part in relation to other parts in the product.

The present invention also relates to a system for product development, illustrated in figure 2.

The system 2 comprises a test computer unit 21, adapted present a test person with a number of parts of the product on a unit for visual display on any means for displaying information 22, in the figure represented by a computer screen.

The test computer unit 21 is adapted to present multiple selections of features for each part, and to allow the person to indicate a selection of feature for each part by means of any input device, in the figure illustrated by a keyboard 23 and a mouse 24.

The test computer unit 21 is adapted to present each part, with respective features, visually, and to allow the person to freely combine different features for each part.

The test computer unit 21 is adapted to present a combination of the different parts with selected features seamlessly as a product in a visual presentation, and to allow the person to make a new selection of any features for any part after a first selection has been made. The test computer unit is adapted to allow the person to make new selections until the person is satisfied.

The test computer unit 21 is adapted store a log 3 in a storage unit 25 where the history of every selection made by the person in the process of arriving at the final result is stored.

Figure 3 shows a very schematic illustration of such a log, where the log 3 is represented by a simple string of data, each post 31, 32, 33, .., 3m in the string representing a part of the product 4 and a selected feature for that part 5, where the posts are created consecutively and where the positions of the posts in the log thus represent the in what order the different selections represented by the posts has been made. It is also possible to store other data in each post of the log, such as the time of the selection, which enables an evaluation of how long time a specific feature was considered by the test person and in what combination with other features.

The test computer unit 21 can be adapted to present a default version of the product as a first selection or to allow the person to make the first selection through a selection of a feature for every part.

It is also proposed that the test computer unit 21 is adapted to store the final result 6 in the log 3.

The inventive system also comprises an evaluation computer unit 7, adapted evaluate the log 3 together with logs 3', 3" from several different test persons. These different logs may come from mutually different test computers or from the same test computer were different test persons has made their selections at different times. The evaluation computer unit can also be the same computer unit as the test computer unit.

The features of the different part can be anything related to respective part depending on in what sense the product is to be developed. These features might for instance relate to the form, colour, structure or material of the part, or it might relate to the position of the part in relation to other parts in the product.

It should be understood that the present invention is not restricted to particular kinds of products, but can be used for the development of any kind of product where it might be important to understand or know how a future customer would like the product to be and where the process of how the test person arrived at the final result is beneficial for the evaluation of the selection.

An example of a product is a food tray on an airline, where parts of the product would be a bowl for hot food, a bowl for vegetables, a cup for water, a cup for juice, a coffee cup, a bowl for desert, cutlery and a bag with napkins, salt pepper, sugar and cream. Features for each part could in this example be different positions on the tray. The tray itself could also be a part with features that the tray is a flat tray with loose parts or that the tray and the bowls are integrated into one part, but where the positions of respective integrated bowls stil are features for these parts.

An example of an entirely different product is a holiday resort, where the parts can be the hotel, such as the standard of the hotel, transportation to and from the resort, such as buses or cabs, activities available at the resort, such as pool areas, golf, fishing and swimming. Features can also be locations of these parts in relation to each other and in relation to the geographical surroundings of the resort. One part could even be geographical location of the resort in a limited area, in a country or even on earth.

Yet another example is the design of a product is a bottle for beverages, where parts could be the opening, such as small, medium, or large opening, the closure, such as different kinds closures, shoulder, such as sharp or soft shoulder, the body, such as straight, bulging or waist, and the bottom, such as flat or concave bottom. Other features could be colour of the bottler, material, such as glass or plastic, opaque or clear, position of the label, size and form of the label, graphical design of the label and so on.

The present invention also relates to a computer program product 81 comprising computer program code 81 a, which, when executed by a computer enables the computer to perform the above described inventive method.

The present invention also relates to a computer program product 82 comprising computer program code 82a, which, when executed by a computer enables the computer to function as an inventive test computer unit 21.

The present invention also relates to a computer program product 83 comprising computer program code 83a, which, when executed by a computer enables the computer to function as an inventive evaluation computer unit 7.

The present invention also relates to a computer readable medium 8 carrying inventive computer program code 81 a, 82a, 83a as described above, schematically illustrated as a compact disc in figure 4.

It will be understood that the invention is not restricted to the aforedescribed and illustrated exemplifying embodiments thereof and that modifications can be made within the scope of the inventive concept as illustrated in the accompanying Claims.

## Claims

1. A method for product development, where a test person is presented with a number of parts of said product, where multiple selections of features are available for each part, where said person can indicate a selection of feature for each part, where each part, with respective features, is presented visually by a computer unit, where said person freely can combine different features for each part through said computer unit, where a combination of said different parts with selected features is presented seamlessly as a product in a visual presentation by said computer unit, where said person can make a new selection of any features for any part after a first selection has been made, and where new selections can be made until said person is satisfied, **characterised in, that** a log is stored in a storage unit belonging to said computer unit, and that said log contains the history of every selection made by said person in the process of arriving at the final result of said selections.

2. A method according to claim 1, **characterised in, that** said first selection is a default version of said product presented to said person.

3. A method according to claim 1, **characterised in, that** said first selection is made by said person through a selection of a feature for every part.

4. A method according to claim 2 or 3, **characterised in, that** said log is made available together with logs from several different persons in a subsequent evaluation.

5. A method according to any preceding claim, **characterised in, that** said final result is stored in said log.

6. A method according to any preceding claim, **characterised in, that** said features relates to the form, colour, structure or material of the part.

7. A method according to any preceding claim, **characterised in, that** said features relates to the position of the part in relation to other parts in said product.

8. A system for product development, said system comprising a test computer unit, adapted present a test person with a number of parts of said product, where said test computer unit is adapted to present multiple selections of features for each part, where said test computer unit is adapted to allow said person to indicate a selection of feature for each part, where said test computer unit is adapted to present each part, with respective features, visually, where said test computer unit is adapted to allow said person to freely combine different features for each part, where said test computer unit is adapted to present a combination of said different parts with selected features seamlessly as a product in a visual presentation, where said test computer unit is adapted to allow said person to make a new selection of any features for any part after a first selection has been made, and where said test computer unit is adapted to allow said person to make new selections until said person is satisfied, **characterised in, that** said test computer unit is adapted store a log in a storage unit, and that said test computer unit is adapted to store the history of every selection made by said person in the process of arriving at the final result of said in log.

9. A system according to claim 8, **characterised in, that** said test computer unit is adapted to present a default version of said product as said first selection.

10. A system according to claim 8, **characterised in, that** said test computer unit is adapted to allow said person to make said first selection through a selection of a feature for every part.

11. A system according to any one of claims 8 to 10, **characterised in, that** said test computer unit is adapted to store said final result in said log.

12. A system according to any one of claims 8 to 11, **characterised in, that** an evaluation computer unit is adapted to evaluate said log together with logs from several different persons.

13. A system according to any one of claims 8 to 12, **characterised in, that** said features relates to the form, colour, structure or material of the part.

14. A system according to any one of claims 8 to 13, **characterised in, that** said features relates to the position of the part in relation to other parts in said product.

15. A computer program product, **characterised in, that** said computer program product comprises computer program code, which, when executed by a computer enables said computer to perform a method according to any one of claims 1 to 7.

16. A computer program product, **characterised in, that** said computer program product comprises computer program code, which, when executed by a computer enables said computer to function as a test computer unit according to any one of claims 8 to 11 or 13 to 14.

17. A computer program product, **characterised in, that** said computer program product comprises computer program code, which, when executed by a computer enables said computer to function as an evaluation computer unit according to claim 12.

18. A computer readable medium, **characterised in, that** said computer readable medium carries computer program code according to any one of claims 15 to 17.
